Europäisches Patentamt

European Patent Office

Office européen des brevets

(11) Publication number: **0 202 666**
**B1**

(12) **EUROPEAN PATENT SPECIFICATION**

(45) Date of publication of patent specification: **08.08.90**

(51) Int. Cl.⁵: **F 16 K 5/06, F 16 K 41/04**

(21) Application number: **86106887.2**

(22) Date of filing: **21.05.86**

(54) **Improvement in on-off valves.**

(30) Priority: **24.05.85 IT 2089685**

(43) Date of publication of application:
**26.11.86 Bulletin 86/48**

(45) Publication of the grant of the patent:
**08.08.90 Bulletin 90/32**

(84) Designated Contracting States:
**AT BE CH DE FR GB LI LU NL SE**

(56) References cited:
**DE-A-2 364 132**
**DE-A-2 412 698**
**DE-B-1 285 816**
**DE-C- 499 091**
**FR-A- 571 240**
**FR-A-2 202 572**
**GB-A-1 480 299**
**US-A-2 844 392**
**US-A-3 472 485**

(73) Proprietor: **Grove Italia S.p.A.**
**Strada Campoferro 15**
**I-27058 Voghera (Pavia) (IT)**

(72) Inventor: **Bianchi, Giuseppe**
**Via D. Fedele 10**
**I-27048 Sommo (Pavia) (IT)**
Inventor: **Vignati, Giuseppe**
**Via Caduti, 118**
**I-27030 Sairano (Pavia) (IT)**
Inventor: **Niccolini, Giancarlo**
**Via Calabria 2**
**I-27058 Voghera (Pavia) (IT)**

(74) Representative: **Dragotti, Gianfranco et al**
**SAIC BREVETTI s.a.s. Viale Bianca Maria, 15**
**I-20122 Milano (IT)**

Courier Press, Leamington Spa, England.

## Description

The present invention relates to an improvement in on-off valves, in particular in the valves employed in drilling installations such as marine platforms for oil prospecting, drilling and extraction.

It is known that in the majority of oil extraction systems the natural gases are returned into the pocket from which the oil is extracted in such a manner as to maintain the pressure in said pocket to aid extraction.

When the oil is exhausted these natural gases are often extracted and processed for use as an energy source.

In all cases there are provided in the ducts and piping of the extraction system on-off valves normally of the manually operated or automated ball type which must ensure the best possible sealing because a gas leak can easily cause irreparable disasters due to fires and/or explosions.

Said sealing however is severely hindered by the surrounding conditions in which said valves must operate and in particular the great temperature ranges involved. These valves must ensure sealing at temperatures, varying between −65°C and +350°C. The pressures involved are also severe, reaching 190 bar.

The design of heretofore known valves has not been able to ensure such performance, making necessary complicated sealing and supervision systems. Suffice it to mention for example that the specifications applicable to a system of the aforesaid type require that the dynamic seal at the operating stem of the valve ensure losses not greater than 0.15 Nm³ per year.

FR—A—2202572 discloses a valve having a seat and a male valve element rotatably housed in the seat the seal at the valve seat being provided by a metal bellows assembly.

DE—A—2364132 discloses a sealing device in an assembly comprising a stem and a sheath, wherein the seal consists of assymetrically V-shaped rings providing a substantial sealing pressure against the stem or sheath even at low pressures.

DE—B—1285816 describes a dilation compensating device for pipes wherein an ondulated pipe length is inserted between two pipe ends to be connected and wherein this ondulated pipe length is provided with an armor outer plating.

The object of the present invention is to provide a valve design which would solve the problems outlined above in an industrially profitable manner.

According to the invention, the valve is a valve of the type comprising a valve body having a seat for a valve element, said seat being connected with two coaxial passages or ducts and a valve element which can be made to rotate in said seat around an axis perpendicular to the axis of said ducts between two positions opening and closing respectively the connection between said two ducts, said valve element being operated by a stem turning in a sheath fixed to said valve body, the seal between said stem and said sheath being ensured in a dynamic manner by at least one assembly of ring gaskets made of resilient synthetic plastic material, the seal at the valve seat for each of said ducts being provided by a metal bellows element, said metal bellows element being mounted preloaded axially in such a manner that a pressure radially inside the bellows is added to the elastic axial expansion effect caused by the preloading and creates a seal at both axial ends of said element, while a pressure acting on the exterior of the metal bellows element, if greater than the elastic force of said preloading, causes axial compression thereof and creates a radially extending relief passage with discharge of said external pressure through said passage, characterized in that said ring gaskets have the shape of the letter V and their sides have different inclination in relation to the vertical axis passing through said V, the outermost side of said V being inclined in relation to said vertical axis at a smaller angle than the innermost side, and in that the loops of said metal bellow element are supported externally by a shaped armor plating.

The peculiar features and benefits of the present invention will appear more clearly from the following detailed description given with reference to the annexed drawings in which:—

Fig. 1 shows a sectional axial elevation of the valve of the invention in a preferred embodiment,

Fig. 2 shows a partial sectional view, on enlarged scale, of the dynamic sealt for the operating stem of the valve of Fig. 1,

Fig. 3 is a partial sectional view, on enlarged scale, of the armored bellows sealt at the two ducts connected with the valve seat, and

Fig. 4 is a view similar to that shown in Fig. 3 except for the difference in the operating condition.

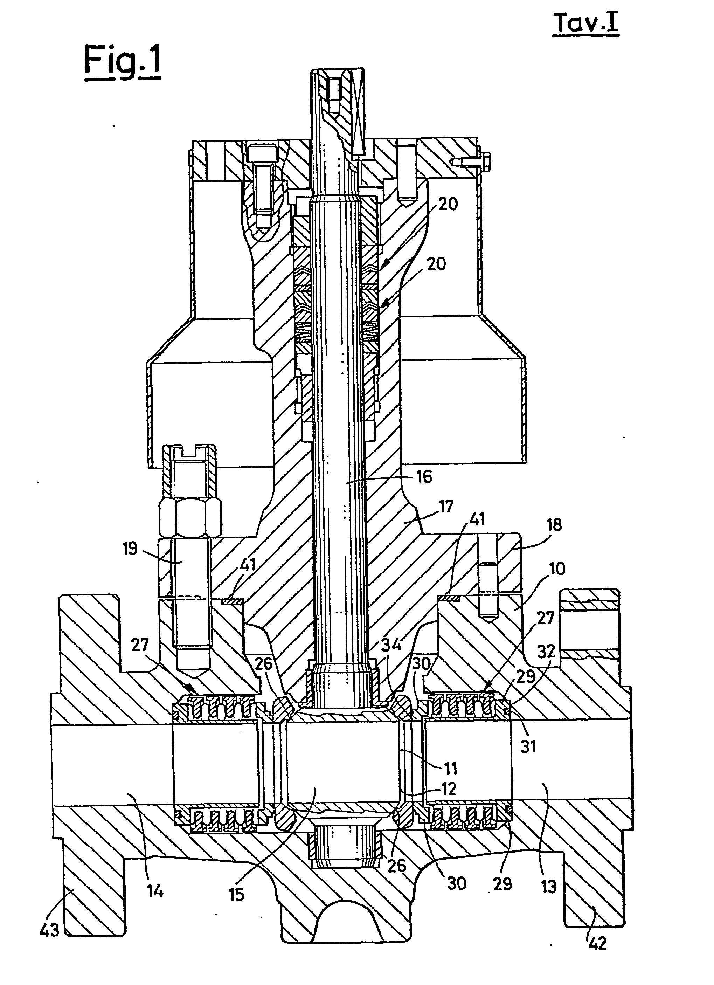

With reference to Fig. 1 the valve in accordance with the present invention comprises a valve body 10 in which there is a seat 11 for housing and operation of a male valve element 12 which turns between a cutoff position in which it interrupts the connection between the two ducts 13 and 14 and a flow position in which said two ducts are connected through an axial passage 15 made in the valve element 12.

To the valve element 12 to operate it there is fixed a stem 16 which turns around its axis and is housed in a sheath 17 secured to the valve body 10 by means of a flange 18 and bolts 19.

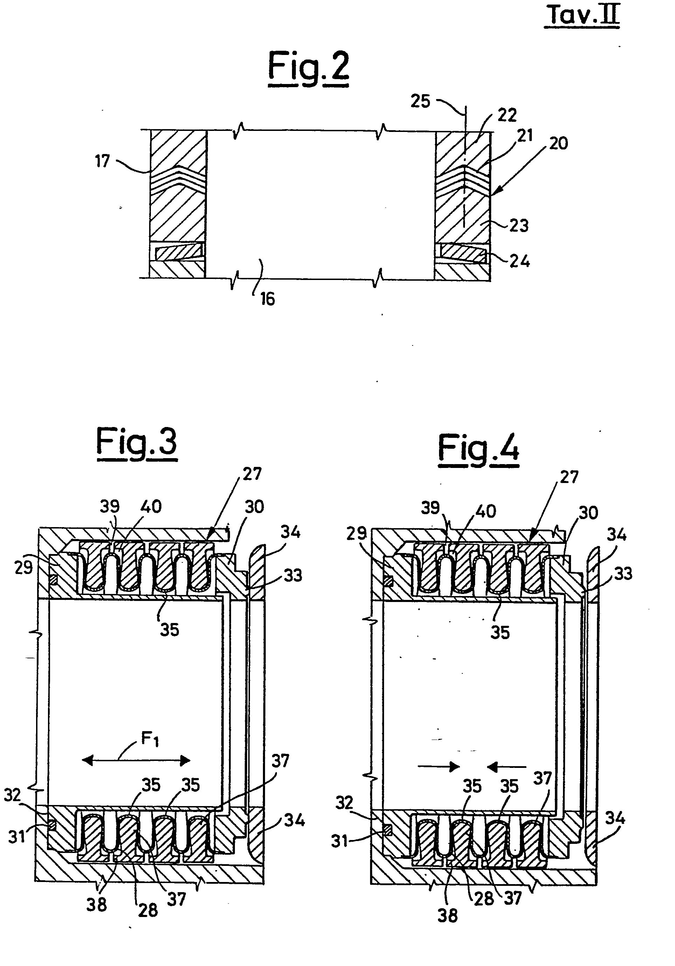

To provide a seal between said stem and sheath there is provided a plurality of gasket assemblies indicated collectively by reference number 20 and shown in greater detail even though schematically in Fig. 2.

As may be seen in Fig. 2, between the stem 16 and the sheath 17 there are provided several groups of V-shaped seal rings 21 having the characteristics set forth below and grouped in packages of at least two rings and enclosed between correspondingly shaped metal elements, the one above each ring package 21 indicated with reference number 22 and the one below with reference number 23.

Appropriately preloaded compression springs 24 keep the components of the assemblies 20 in close contact. Each of the rings 21 is preferably made of polyamide having a degree of elasticity, thickness between 0.8 mm and 3 mm, and width between 8 mm and 20 mm.

As may be seen in Fig. 2 the two sides of the V of each ring have different inclination in relation to the vertical axis 25 passing through the vertices of the Vs in such a manner that the innermost side of the V forms a larger angle with said axis, preferably between 70° and 50°. The outermost side has a greater inclination, i.e. it forms a smaller angle with said axis 25.

Thanks to this structure of the gasket assemblies 20 it has been observed that the losses of gas through the stem fall within the applicable specifications for these systems, i.e. they are less than 5 scf/y (approximately 0.15 Nm³ per year) for temperature ranges between −65°C and +350°C and maximum pressures up to 190 bar.

The losses observed are less than said threshold at any temperature and pressure included in the above ranges.

As may be seen in Fig. 1 the number of the seal assemblies 20 in this embodiment is two but can vary depending on the size of the valve and hence of the stem and sheath.

Now considering the sealing at the valve seat it can be seen in Fig. 1 that said sealing between the male element 12 and the seat 11 is created by sealing protuberances as regards the actual seat while as regards the ducts 13 and 14 said sealing is ensured by armored bellows elements indicated generally by reference number 27.

Said elements 27 consist of a tubular bellows element 28 terminating at the two ends in respective terminal seal rings 29 and 30, the tubular element being precompressed axially in a predetermined measure.

In the ring 29 is mounted an annular seat 31, or O'ring, housed in a groove made in said ring which provides sealing when the bellows 27 expands axially against the adjacent surface of a lowered part 32 made in the body of the respective duct.

The terminal ring 30 has a protuberance or ribbing 33 designed to form a seal in case of axial expansion of said bellows against the adjacent outer wall 34 of the valve seat 11.

As may be clearly seen in Figs. 1, 3 and 4, in the loops 35 of the tubular bellows element are seated the teeth 37 of an armor-plating comb element 38 which however makes possible thanks to the slots 39 and the tolerances 40 between the teeth axial expansion and contraction of the bellows in relation to the operating conditions of the valve.

Another seal 41 is provided at the juncture between the flange 18 and the valve body 10, the latter being completed by the end flanges 42 and 43 for connection of the ducts 13 and 14.

The bellows seal 27 operates in the following manner.

In the case shown in Fig. 3 there is illustrated the situation brought about by high pressure inside the related duct 13(14) which is represented by the arrow $F_1$. In this case there is added to the elastic effect caused by preloading of the tubular element 28, which is preloaded axially during assembly as already mentioned, a piston effect from the internal pressure acting on the interior of the loops so that the two terminal rings are thrust to form a seal by the ribbing 33 in front and by the elastic gasket 31 behind.

In the case shown in Fig. 4 there is illustrated the situation which occurs when an external pressure acts on the bellows. In this case, when the piston effect from the external pressure which tends to compress the loops exceeds the axial preloading of the tubular element, said tubular element contracts axially so that between the ribbing 33 and the seat surface 34 there is created a relief passage for the external pressure which, penetrating into the respective duct 13(14), is discharged without harm to the valve structure and especially the gasproof seal of the valve if closed. It is clear that in this case the external pressure will be far greater than the pressure inside the ducts or at least one of the ducts, a condition which occurs often when the valve is closed, i.e. with communication cut off between the ducts 13 and 14.

From the tests performed with the above valve structure it was observed that the armored bellows seal at the valve seat also resists temperatures between −65°C and 350°C and maximum pressures of 190 bar under extreme temperature conditions.

## Claims

1. Valve of the type comprising a valve body (10) having a seat (11) for a valve element, said seat being connected with two coaxial passages or ducts (13, 14) and a valve element (12) which can be made to rotate in said seat around an axis perpendicular to the axis of said ducts between two positions opening and closing respectively the connection between said two ducts, said valve element being operated by a stem (16) turning in a sheath (17) fixed to said valve body, the seal between said stem and said sheath being ensured in a dynamic manner by at least one assembly (20) of ring gaskets (21) made of resilient synthetic plastic material, the seal at the valve seat (11) for each of said ducts (13, 14) being provided by a metal bellows element (27), said metal bellows element being mounted preloaded axially in such a manner that a pressure radially inside the bellows is added to the elastic axial expansion effect caused by the preloading and creates a seal at both axial ends of said element (27), while a pressure acting on the exterior of the metal bellows element, if greater than the elastic force of said preloading, causes axial compression thereof and creates a radially extending relief passage with discharge of said external pressure through said passage, characterized in that said ring gaskets (21) have the shape of the letter V and their sides have different inclination in relation to the vertical axis passing through said V, the outermost side of said V being inclined in relation to said vertical axis at a smaller angle than the innermost side, and in that the loops of said metal bellow element (27) are supported externally by a shaped armor plating (38).

2. Valve in accordance with claim 1 characterized in that each gasket assembly (20) comprises at least two polyamide rings (21) having a thickness of between 0.8 mm and 3 mm, the inclination of said innermost sides of the V being between 70° and 50° in relation to said vertical axis.

3. Valve in accordance with claim 2 characterized in that said rings (21) are grouped in packs enclosed between correspondingly shaped metal elements (22, 23) and stressed by preloaded springs (24).

4. Valve in accordance with claim 1, characterized in that said armored metal bellows (27) consists of a tubular metal bellows element (28) terminating in two end rings (29, 30) designed to create a seal against the external surface of said valve seat (11) and against a lovered part (32) respectively of the corresponding duct (13, 14) said armor-plate consisting of the teeth (37) of a comb element housed in the loops (35) of said tubular metal bellows element (38).

5. Valve in accordance with claim 4 characterized in that said comb element has slots (39) and tolerances (40) between the teeth (37) to allow axial expansion and compression of said tubular metal bellows element (38).

**Patentansprüche**

1. Ventil der Art, das einen Ventilkörper (10) umfaßt, der einen Sitz (11) für ein Ventilelement hat, wobei dieser Sitz mit zwei koaxialen Durchgängen oder Kanälen (13, 14) und einem Ventilelement (32) verbunden ist, das in dem Sitz um eine Achse, die senkrecht zu der Achse der Kanäle ist, zwischen zwei Positionen drehbar ist, in denen die Verbindung zwischen den zwei Kanälen geöffnet bzw. geschlossen ist, wobei das Ventilelement mittels eines Schafts (16) betätigt wird, der sich in einer an dem Ventilkörper befestigten Hülle (17) dreht, wobei die Abdichtung zwischen dem Schaft und der Hülle in einer dynamischen Weise mittels wenigstens einer Anordnung (20) von Ringdichtungen (21) sichergestellt ist, die aus elastischem synthetischem Plastikmaterial hergestellt sind, wobei die Abdichtung des Ventilsitzes (11) für jeden der Kanäle (13, 14) durch ein Metallbalgelement (27) erzielt wird, wobei das Metallbalgelement axial vorbelastet in einer solchen Weise montiert ist, daß ein radialer Druck im Inneren des Balgs zu dem elastischen axialen Ausdehnungseffekt, welcher durch die Vorbelastung bewirkt wird, addiert wird und eine Abdichtung an beiden Achsenenden besagten Elements (27) erzeugt, während ein Druck, der auf das Aeußere des Metallbalgelements wirkt, wenn er größer als die elastische Kraft der erwähnten Vorbelastung ist, eine axiale Kompression desselben bewirkt und eine radial auslaufende Entspannungspassage mit einer Entladung dieses externen Drucks durch besagte Passage schafft, dadurch gekennzeichnet, daß besagte Ringdichtungen die Form des Buchstabens V haben und deren Seiten unterschiedliche Neigungen mit Bezug auf die durch das V hindurchgehende Vertikalachse haben, wobei die äußerste Seite des V mit Bezug auf diese Vertikalachse unter einem kleineren Winkel als die innerste Seite geneigt ist, und dadurch daß die Windungen besagten Metallbalgelements (27) extern durch eine geformte Bewehrungsbeplattung (38) abgestützt sind.

2. Ventil nach Anspruch 1, dadurch gekennzeichnet, daß jede Dichtungsanordnung (20) wenigestens zwei Polyamidringe (21) umfaßt, die eine Dicke zwischen 0,8 und 3 mm haben, wobei die Neigung der erwähnten Seiten des V zwischen 70° und 50° mit Bezug auf die erwähnte Vertikalachse ist.

3. Ventil nach Anspruch 2, dadurch gekennzeichnet, daß die Ringe (21) in Packungen gruppiert sind, welche zwischen entsprechend geformten Metallelementen (22, 23) eingeschlossen und durch vorbelastete Federn (24) belastet sind.

4. Ventil nach Anspruch 1, dadurch gekennzeichnet, daß der bewehrte Metallbalg (27) aus einem rohrförmigen Metallbalgelement (28) besteht, das in zwei Endringen (29, 30) endet, die so ausgebildet sind, daß sie eine Abdichtung gegen die äußere Oberfläche des Ventilsitzes (11) bzw. gegen einen eingelassenen Teil (32) der entsprechenden Kanäle (13, 14) erzeugen, wobei die erwähnte Bewehrungsplatte aus den Zähnen (37) eines Kammelements besteht, das in den Windungen (35) besagten rohrförmigen Metallbalgelements (38) untergebracht ist.

5. Ventil nach Anspruch 4, dadurch gekennzeichnet, daß das Kammelement Schlitze (39) und Toleranzen (40) zwischen den Zähnen (37) hat, um eine axiale Ausdehnung und Kompression besagten rohrförmigen Metallbalgelements (38) zu ermöglichen.

**Revendications**

1. Robinet du type comportant un corps de robinet (10) possédant un siège (11) pour un obturateur sous forme d'un tournant, le siège communiquant avec deux passages ou conduits (13, 14) coaxiaux et le tournant étant disposé rotatif dans le siège autour dun axe perpendiculaire à l'axe des conduits, entre deux positions, une position d'ouverture et une position de fermeture de la communication entre les deux conduits, le tournant étant manoeuvré par une tige (16) tournant dans un fourreau ou chandelle fixé au corps du robinet (17), l'étanchéité entre la tige et la chandelle étant assurée de façon dynamique par au moins une garniture (20) composée de bagues d'étanchéité (21) faites d'une matière plastique synthétique dotée d'élasticité, le dispositif d'étanchéité prévu sur le siège du robinet (11) pour chacun des conduits (13, 14) étant formé par un soufflet métallique (27), le soufflet métallique étant monté avec précontrainte axiale, de manière qu'une pression à l'intérieur du soufflet s'ajoute à l'effet élastique d'expansion dans le sens axial produit par la précontrainte et crée une zone de fermeture étanche aux deux extrémités dudit soufflet (27), tandis qu'une pression agissant sur l'extérieur du soufflet métallique, si elle est supérieure à la force élastique de ladite précontrainte, provoque la compression axiale du soufflet et crée un passage de décharge qui s'étend radialement, avec décharge de ladite pression extérieure à travers dudit passage, caractérisé en ce que les bagues ont la forme de la lettre V, les branches du V ayant des inclinaisons différentes par rapport à l'axe vertical passant par la pointe du V, la branche radialement extérieure du V étant inclinée d'un plus petit angle sur cet axe vertical que la branche radialement intérieure et en ce que les plis dudit soufflet métallique sont supportés extérieurement par une armature de forme adéquate.

2. Robinet selon la revendication 1, caractérisé en ce que chaque garniture d'étanchéité (20) comporte au moins deux bagues de polyamide (21) dont l'épaisseur est comprise entre 0,8 et 3 mm, l'inclinaison des branches du V, par rapport à l'axe vertical, étant comprise entre 70° et 50°.

3. Robinet selon la revendication 2, caractérisé en ce que les bagues de chaque garniture (21) sont réunies en un empilage enfermé entre des éléments métalliques (22, 23) de forme complémentaire et comprimé par des ressorts (24) précontraints.

4. Robinet selon la revendication 1, caractérisé en ce que le soufflet métallique (27) armé se présente sous forme d'un soufflet métallique tubulaire (28) se terminant par deux bagues d'extrémité (29, 30) conçues pour créer une zone d'étanchéité contre la surface extérieure du siège du robinet (11), respectivement contre un épaulement des conduits (13, 14) correspondants, l'armature étant constituée par des dents (37) faisant partie d'un élément en peigne et logées dans les creux (35) des ondulations du soufflet métallique tubulaire (38).

5. Robinet selon la revendication 4, caractérisé en ce que l'élément en peigne présente des fentes (39) et des vides (40) entre les dents (37) pour permettre la dilatation et la compression axiales du soufflet métallique tubulaire (38).

EP 0 202 666 B1

# Fig.1

Tav.I

1

## Fig.2

## Fig.3

## Fig.4